# EUROPÄISCHE PATENTSCHRIFT

(11) **EP 3 078 587 B1**
(45) Veröffentlichungstag und Bekanntmachung des Hinweises auf die Patenterteilung: **25.08.2021**
(21) Anmeldenummer: 16164033.9
(22) Anmeldetag: 06.04.2016
(51) Int. Cl.: B64C 3/28, B64C 3/14

(54) **FLÜGELKÖRPER**
WING BODY
CORPS À AILETTE

(30) Priorität: 08.04.2015 DE 102015105299
(43) Veröffentlichungstag der Anmeldung: 12.10.2016
(73) Patentinhaber: Deutsches Zentrum für Luft- und Raumfahrt e.V., 51147 Köln (DE)
(72) Erfinder: Kleineberg, Dr. Markus, 30966 Hemmingen (DE); Ückert, Christian, 21682 Stade (DE); Steffen, Olaf, 22763 Hamburg (DE); Kaps, Robert, 38179 Schwülper (DE)
(74) Vertreter: Aisch, Sebastian

(56) Entgegenhaltungen:
- EP-A2- 1 873 056
- WO-A1-2013/078649
- WO-A1-2013/079918
- FR-A- 574 844
- US-A1- 2013 026 295
- None

## Beschreibung

Die Erfindung betrifft einen Flügelkörper für ein Flugobjekt umfassend wenigstens zwei Flügelkörper-Bauelemente, die jeweils an einer Außenseite eine umströmbare Strömungsoberfläche aufweisen und an einer Innenseite eine zur Außenseite abgegrenzten Innenraum ausbilden. Die Erfindung betrifft ebenso ein Verfahren zum Verbinden derartiger Flügelkörper-Bauelemente zu einem Flügelkörper.

Im Sinne der vorliegenden Erfindung werden unter dem Begriff "Flügelkörper" diejenigen Elemente eines Flugobjektes verstanden, die von dem Rumpf des Flugobjektes abstehend angeordnet sind und bei bestimmungsgemäßen Gebrauch des Flugobjektes durch Luftschichten angeströmt werden, wodurch aerodynamische Kräfte hervorgerufen werden. So sind die Tragflügel (Tragflächen) sowie die Leitwerke (Höhenleitwerk, Seitenleitwerk) insbesondere Flügelkörper im Sinne der Erfindung.

Unter einem Flügelkörper-Bauelement im Sinne der vorliegenden Erfindung wird ein Bauelement des Flügelkörpers verstanden, dass wenigstens einen Teil des Flügelkörpers beinhaltet, insbesondere einen Teil der Gesamtströmungsoberfläche des Flügelkörpers. Derartige Flügelkörper-Bauelemente bilden im zusammengesetzten Zustand den gesamten Flügelkörper, wobei Flügelkasten, Flügelschalen, Flügelvorder- bzw. Flügelhinterkanten insbesondere Flügelkörper-Bauelemente im Sinne der vorliegenden Erfindung sein können.

Die Profilflächen der Flügelkörper von Flugobjekten, wie beispielsweise Tragflächen von Verkehrsflugzeugen, besitzen zunächst grundsätzlich laminare Grenzschichten, die bei heutigen Verkehrsflugzeugen jedoch frühzeitig in turbulente Grenzschichten umschlagen. Eine solche turbulente Grenzschicht weist dabei einen deutlich erhöhten Reibungswiderstand auf als eine laminare Grenzschicht. Die Instabilität der Grenzschicht, die zum Umschlag führt, wird durch Formabweichungen, wie sie Lücken und Stufen der Kontur der Profilfläche darstellen, begünstigt.

Zulässige Werte für diese Formabweichungen sind beispielsweise 0,5 mm für Stufen entgegen der Strömungsrichtung sowie 0,1 mm der Stufen in Richtung der Strömung.

Werden derlei Formabweichungen insbesondere im Vorderbereich der aerodynamischen Funktionsfläche vermieden, führt dies zu einem späteren Umschlag der Strömung von einer laminaren Grenzschicht in eine turbulente Grenzschicht und somit zu einem erweiterten Bereich der laminaren Profilumströmung. Dies wiederum führt zu einer Widerstandsreduzierung und direkter Treibstoffeinsparung bzw. gesteigerten Reichweite des Flugzeuges.

Heutige Verkehrsflugzeuge benötigen zur Erzeugung des zur Kompensation der Massekraft erforderlichen Auftriebs in der Start- und Landephase speziellen Einrichtungen an den Tragflügeln, die als Hochauftriebssystem bezeichnet werden. Betrachtet man die Luftströmung vor allem im Hinblick auf die Laminarität der Grenzschicht, sind die Hochauftriebssysteme am Vorflügel von übergeordneter Bedeutung. Hierbei werden im Stand der Technik zwei verschiedene Ausführungsformen unterschieden:
a) die ausfahrbaren Vorflügel (Slats) und
b) die Krüger-Klappen (Krüger-Flaps).

Bei den ausfahrbaren Vorflügeln wird die Spitze des Flügels auf Schienen geführt und im Bedarfsfall nach vorne ausgefahren. Im eingezogenen Zustand hinterlassen die dabei eine Lücke bzw. einen Absatz auf der Oberseite der aerodynamischen Oberfläche des Flügels, so dass ab diesem Bereich eine laminare Grenzschicht nicht mehr möglich ist. Im Gegensatz dazu stören die Krüger-Flaps die aerodynamische Oberfläche auf der Flügeloberseite nicht, da sie aus der Unterseite des Vorflügels ausgeklappt werden.

Grundsätzlich bestehen derlei Flügelkörper, insbesondere die Tragflügel von Verkehrsflugzeugen, aus einem Flügelkasten, der zwei diametral gegenüberliegende Flügelschalen hat, die mit Hilfe von Holmen und Rippen im Inneren des Flügelkastens gehalten werden und dabei auch der Einhaltung der geforderten Profilkontur des Flügels dienen. Häufig bildet der Flügelkasten dabei auch einen innenliegenden Treibstofftank. In Strömungsrichtung vor dem Flügelkasten wird die Flügelvorderkante befestigt, welche die äußere Strömungsoberfläche des Flügelkastens mit der äußeren Strömungsoberfläche der Flügelvorderkante zu einem Strömungsprofil verbindet und darüber hinaus die bei einigen Flugzeugen vorgesehenen Hochauftriebssysteme im Vorflügel enthält (Slats oder Krüger-Flaps).

Bei einem konventionellen Verkehrsflugzeug wird der Flügel bzw. der Flügelkörper in der Regel aus einem Aluminiummaterial gefertigt, wobei die Struktur der Flügelvorderkante mit der Struktur des Flügelkastens vernietet wird. Eine solche Nietverbindung zeichnet sich dabei dadurch aus, dass ein entsprechender Bolzen bzw. ein Verbindungselement durch die Oberfläche der jeweiligen Struktur geführt wird, wobei an den äußeren Kanten dann ein entsprechender Abschluss vorgesehen ist. Die Vorderflügelkante und eine der Flügelschalen des Flügelkastens werden hierfür überlappend angeordnet und dann mit mehreren Nietverbindungen verbunden, wobei eine solche Nietverbindung eine zusätzliche Störung auf der Strömungsoberfläche darstellt und somit die Grenzschicht negativ beeinflusst. So wird durch den Nietkopf an der Strömungsoberfläche der Umschlag von der laminaren in eine turbulente Grenzschicht begünstigt, so dass grundsätzlich eine derartige Nietverbindung im Vorflügelbereich vermieden werden sollte.

Zwar gibt es Bestrebungen, den Flügelkörper integral auszubilden, d.h. die Vorderkante und den Flügelkasten aus einem einzigen Bauteil zu fertigen. Dies hätte zwar den Vorteil, dass die Strömungsoberfläche frei von Störungen wäre, was sich grundsätzlich günstig auf die Laminarströmung auswirkt. Allerdings ist die Flügelvorderkante eines Verkehrsflugzeuges gegenüber Beschädigungen besonders exponiert, so dass es regelmäßig zu sogenannten Vogelschlägen, d.h. Zusammenstößen mit Vögeln kommt, die zu Beschädigungen der Struktur der Flügelvorderkante führen. In einer solchen integralen Bauweise wäre nun die Vorderkante nicht mehr austauschbar, so dass die beschädigte Struktur entweder repariert werden müsste oder der komplette Flügel ausgetauscht werden müsste. Aufgrund der Tatsache, dass ein Flügel jedoch wichtige Elemente, wie beispielsweise den Treibstofftank enthält, ist der vollständigen Austausch eines Flügels nur aufgrund einer Beschädigung an der Flügelvorderkante wirtschaftlich nicht zu rechtfertigen.

Aus diesem Grund ist trotz der beschriebenen Problematiken bei der differentiellen Bauweise eines Flügelkörpers und trotz der auf der Hand liegenden Vorteile einer integralen Bauweise allein aus ökonomischen Aspekten die differentielle Bauweise vorzuziehen, da nur so ein Austausch und eine Reparatur mit adäquatem Aufwand möglich ist.

Eine weitere Möglichkeit, Treibstoff einzusparen und so ggf. die Reichweite des Flugzeuges zu verlängern, besteht darin, das Gesamtgewicht des Flugzeuges zu reduzieren. Aufgrund der hohen Festigkeit und Steifigkeit sowie des dabei sehr geringen Gewichtes sind daher Faserverbundwerkstoffe, wie beispielsweise Kohlenstofffasern-Verbundwerkstoffe, aus der Luft- und Raumfahrt heute nicht mehr wegzudenken. Dabei werden zunehmend auch strukturkritische Bauteile aus diesen Werkstoffen hergestellt, um Gewicht einzusparen. Es bestehen daher große Bestrebungen, Flügelkörper von Flugzeugen, insbesondere von Verkehrsflugzeugen, vollständig aus einem Faserverbundwerkstoff herzustellen, da hierdurch signifikant das Gesamtgewicht eines Flugzeuges reduziert werden kann.

Hält man an der differentiellen Bauweise fest, so bedarf es neuer Verbindungsmechanismen, um die einzelnen Flügelkörper-Bauelemente zu einem Flügelkörper zu verbinden, wenn der Flügelkörper zum einen zwecks Gewichtsreduktion aus einem Faserverbundwerkstoff bestehen soll und zum anderen die laminare Grenzschichtströmung möglichst lange aufrechterhalten bleiben soll. Gerade in der Kombination von leichten Materialien mit laminar erhaltenen Strömungsoberflächen kann ein optimales Ergebnis hinsichtlich des Treibstoffverbrauches erzielt werden.

Aus der DE 10 2011 107 624 A1 ist eine Verbindungsanordnung zur aerodynamisch glatten Verbindung zweier Profilelemente bekannt, wobei die Profilelemente in einem Verbindungsbereich abgesenkt und überlappend angeordnet sind. In diesem überlappenden Verbindungsbereich werden nun Nietverbindungen eingebracht, wobei die Nietverbindungen dann mit einer Füllmasse in Bezug auf die Strömungsoberfläche verschlossen werden.

Allerdings werden hohe Anforderungen an die Präzision des Füllvorgangs selbst gestellt, wobei das Füllmaterial eine gewisse Härtezeit aufweist, was grundsätzlich einer schnellen Austauschbarkeit eines der Profilelemente entgegensteht. Außerdem wird durch das Füllmaterial selber die Demontage des Bauteils erschwert. Schließlich hat sich ebenfalls als nachteilig herausgestellt, dass aufgrund von Reaktionsschrumpfungen des Füllmaterials die Oberflächenstruktur unberechenbar wird, da insbesondere ein nicht unerheblicher Teil der Strömungsoberfläche verfüllt werden muss. Dabei kann es passieren, dass in dem Verbindungsbereich eine lineare Strömungsoberfläche in einer ansonsten gekrümmten aerodynamischen Oberfläche entsteht, so dass die Folgen für die Strömungsgrenzschicht gänzlich ungewiss bleiben.

Aus der DE 10 2012 109 233 A1 ist des Weiteren bekannt, die Flügelvorderkante an den Flügelkasten mit Hilfe von innenliegenden Befestigungsmitteln zu befestigen, wobei die Flügelvorderkante an Rippenverlängerungen des Flügelkastens angebracht wird. Im Bereich des Übergangs zwischen Flügelvorderkante und Flügelschale des Flügelkastens ist darüber hinaus vorgesehen, ein L-Profil an die Flügelvorderkante mit Hilfe einer Nietverbindung zu befestigen, um so die Flügelvorderkante im Übergangsbereich an dem Flügelkasten zu befestigen. Hierbei wird die Verbindung zwischen Flügelvorderkante und L-Profil unter die Flügelhaut des Flügelkastens geschoben und somit durch die Flügelschale verdeckt. Ein etwaiger entstehender Oberflächenabsatz kann mit einem Füllmaterial verfüllt werden.

Nachteilig hierbei ist jedoch, dass mit den L-Profilen eine nicht unerhebliche, zusätzliche Masse in den Flügel eingebracht wird, was dem Prinzip des optimierten Leichtbaus entgegensteht. Außerdem wird der zur Verfügung stehende Innenraum zusätzlich eingeschränkt, was die Verwendung von Hochauftriebssystemen, wie beispielsweise den Krüger-Flaps, beeinträchtigt. Ein weiterer Nachteil ist, dass die Nietverbindung, mit der die L-Profile an der Vorderkante angebracht sind, durch die Abdeckung der Flügelschale nur unzureichend inspizierbar sind.

Aus der FR 574 844 A ist eine Flügelschale eines Strömungsprofils bekannt, das aus mehreren U-förmigen Einzelelementen zusammengesetzt wird, wobei hierfür entsprechende Befestigungselemente durch die Strömungsoberfläche geführt sind.

Aus der EP 1 873 056 A2 ist ein Befestigungssystem zum Befestigen einer Flügelvorderkante an einem Flügelkasten bekannt, bei dem ein L-förmiges Befestigungselement vorgesehen ist, dessen einer Schenkel mit der Flügelvorderkante einerseits und mit dem anderen Schenkel an dem Flügelkasten andererseits befestigt wird.

Aus der US 2013 / 026295 A1 ist ein Anbindungskonzept zur Anbindung einer Flügelvorderkante an einem Flügelkasten vorgesehen, bei dem auch hier Verbindungselemente durch die Strömungsoberfläche hindurchgeführt werden.

Aus der WO 2013 / 079918 A1 ist die Konstruktion einer Flügelvorderkante an einem Flügelkasten vorgeschlagen, wobei hierfür ein T-förmiges Verbindungselement vorgesehen ist, das mithilfe von durch die Strömungsoberfläche geführten Verbindungselementen an der Flügelvorderkante angeordnet wird.

Schließlich ist aus der WO 2013 / 078649 A1 eine Flügelhinterkante bekannt, die aus ineinandergeschobenen Einzelteilen zusammengesetzt wird. Auch hierfür sind für die Verbindung der einzelnen Teilelemente ein oder mehrere Verbindungselemente vorgesehen, die durch die Strömungsoberfläche hindurchgeführt werden.

Es ist daher Aufgabe der vorliegenden Erfindung einen verbesserten Flügelkörper anzugeben, der eine differentielle Bauweise ermöglicht und gleichzeitig eine gewichtsoptimale Bauweise und laminare Grenzschichterhaltung begünstigt, ohne dass es zu Beeinträchtigungen hinsichtlich der Verwendung von Hochauftriebssystemen kommt. Darüber hinaus ist es Aufgabe der vorliegenden Erfindung einen Flügelkörper anzugeben, bei dem trotz Einhaltung einer laminaren Grenzschichtströmung eine schnelle und effiziente Austauschbarkeit möglich ist, die die Einhaltung der laminaren Grenzschicht nicht beeinträchtigt.

Diese Aufgaben werden mit dem Flügelkörper gemäß Anspruch 1 erfindungsgemäß gelöst.

Demnach ist erfindungsgemäß vorgesehen, dass der Flügelkörper für Flugobjekte wenigstens zwei Flügelkörper-Bauelemente umfasst, die jeweils an einer Außenseite eine umströmbare Strömungsoberfläche aufweisen und an einer Innenseite eine zur Außenseite abgegrenzten Innenraum ausbilden. Hierdurch wird ein Flügelkörper geschaffen, der einen Innenraum von einem Außenraum trennt, wobei an der äußeren Oberfläche hin zum Außenraum die Strömungsoberfläche vorgesehen ist und der Innenraum im Wesentlichen hohl ausgebildet ist, so dass hier weitere wichtige Elemente des Flugobjektes untergebracht werden können. So kann der Flügelkörper beispielsweise eine Tragfläche sein, wobei das erste Flügelkörper-Bauelement die Flügelvorderkante und das zweite Flügelkörper-Bauelement der Flügelkasten oder die Flügeloberschale des Flügelkastens darstellt.

Damit wird gattungsgemäß zunächst ein Flügelkörper angegeben, der gemäß der differentiellen Bauweise aus wenigstens zwei Bauelementen besteht, so dass beschädigte Teile des Flügelkörpers ausgetauscht werden können.

Erfindungsgemäß ist dabei das erste Flügelkörper-Bauelement eine Flügelvorderkante, während das zweite Flügelkörper-Bauelement ein Flügelkasten mit Flügelschale ist.

Darüber hinaus ist vorgesehen, dass das erste Flügelkörper-Bauelement mindestens ein in den Innenraum ragendes L-Profil hat, das mit dem ersten Flügelkörper-Bauelement integral ausgebildet ist und dass das zweite Flügelkörper-Bauelement mindestens eine in dem Innenraum angeordnete L-Profil-Aufnahme aufweist, an der das integral ausgebildete L-Profil des ersten Flügelkörper-Bauelementes befestigbar ist, um so die beiden Flügelkörper-Bauelemente zu einem Flügelkörper zu verbinden.

Hierfür ist das mindestens eine L-Profil des ersten Flügelkörper-Bauelementes mit innenliegenden Verbindungselementen an der L-Profil-Aufnahme des zweiten Flügelkörper-Bauelementes insbesondere lösbar befestigt, so dass die beiden Flügelkörper-Bauelemente miteinander verbunden sind.

Das mindestens eine L-Profil des ersten Flügelkörper-Bauelementes und die mindestens eine L-Profil-Aufnahme des zweiten Flügelkörper-Bauelementes sind dabei quer zur Strömungsrichtung angeordnet und erstrecken sich spannweitig zu dem Flügelkörper, so dass das erste Flügelkörper-Bauelement im Übergang zu dem zweiten Flügelkörper-Bauelement spannweitig sicher und fest befestigt werden kann, so dass der Flügelkörper insbesondere im Übergangsbereich zwischen dem ersten und dem zweiten Flügelkörper-Bauelement in der Strömungsoberfläche keine Bewegung zulässt und somit eine laminare Grenzschicht begünstigt.

Unter innenliegenden Verbindungselementen wird im Sinne der vorliegenden Erfindung verstanden, dass die Verbindungselemente zum Verbinden der beiden Bauelemente nicht durch die Strömungsoberfläche geführt sind. Unter innenliegenden Verbindungselementen wird insbesondere verstanden, dass die Verbindungselemente im Innenraum liegen und nur über den Innenraum erreichbar sind. Die innenliegenden Verbindungselemente sind dabei an dem nach innen ragenden Schenkel des L-Profils angeordnet, so dass die axiale Ausrichtung der Verbindungselemente im Wesentlichen in Strömungsrichtung ausgerichtet ist.

Das L-Profil und die L-Profil-Aufnahme erstrecken sich dabei quer zur Strömungsrichtung spannweitig, was im Wesentlichen eine Erstreckung in Richtung der Holme eines Tragflügels meint. Mit anderen Worten, das L-Profil und die L-Profil-Aufnahme erstrecken sich bei einem Tragflügel von einem Anfangsbereich an der Tragflächenwurzel hin bis zu einem Endbereich an der Tragflächenspitze.

Das integral ausgebildete L-Profil weist hierbei zwei Schenkel auf, wobei der erste Schenkel des L-Profils im Wesentlichen parallel zu der Strömungsoberfläche des Flügelkörpers im Bereich des L-Profils ausgerichtet ist und der zweite Schenkel des L-Profils unter einem Winkel in den Innenraum des Flügelkörpers hineinragt, wobei der Winkel größer als 45 Grad ist, vorzugsweise je nach Krümmung der Strömungsoberfläche 75 Grad bis 90 Grad.

Aufgrund der integralen Ausbildung des L-Profils verlängert sich somit die Außenseite des ersten Flügelkörper-Bauelementes bis hin zum zweiten Schenkel des L-Profils, so dass die Verlängerung der Außenseite an dem L-Profil ebenso wie die Innenseite des L-Profils in den Innenraum hineinragt und dort verortet ist. In der Regel wird dann der zweite Schenkel des L-Profils an der L-Profil-Aufnahme mit den innenliegenden Verbindungselemente befestigt, wobei insbesondere die hin zum zweiten Schenkel des L-Profils verlängerte Außenseite des ersten Flügelkörper-Bauelementes an der L-Profil-Aufnahme formschlüssig anliegt.

Unter der integralen Bauweise im Sinne der vorliegenden Erfindung wird verstanden, dass das L-Profil mit dem ersten Flügelkörper-Bauelement einstückig ausgebildet ist, d.h. fügestellenfrei. Das L-Profil wird dabei aus dem gleichen Material wie das erste Flügelkörper-Bauelement einstückig und vorzugsweise in einem Herstellungsschritt ausgebildet.

Durch die integrale Bauweise des L-Profils zusammen mit dem ersten Flügelkörper-Bauelement wird entgegen der differentiellen Bauweise aus dem Stand der Technik eine Anbindung des ersten Flügelkörper-Bauelementes an das zweite Flügelkörper-Bauelement unter Einsparung von Masse so erreicht, dass die Strömungsoberfläche des Flügelkörpers auch im Übergangs- bzw. Verbindungsbereich zwischen dem ersten und dem zweiten Flügelkörper-Bauelement eine laminare Grenzschicht begünstigt. Durch den Verzicht eines zusätzlich angenieteten L-Profils, wie dies beispielsweise die DE 10 2012 109 233 A1 vorschlägt, wird die Verdickung im Bereich der Anbindung der beiden Bauelementen vermieden und somit Masse und Raum im Inneren des Flügelkörpers geschaffen. Damit vereint die Erfindung die beiden übergeordneten Ziele, zum einen Masse einzusparen und zum anderen eine laminare Grenzschicht zu begünstigen, was sich proportional auf den Treibstoffverbrauch auswirkt.

Dabei haben die Erfinder erkannt, dass durch eine integrale Bauweise trotz einer ansonsten immer zu bevorzugenden differentiellen Bauweise das erste Flügel-Bauelement dennoch sicher und fest an das zweite Flügel-Bauelement befestigt werden kann, ohne dass es zu Einschränkungen bzgl. der laminaren Grenzschicht kommt.

Hierbei ist es ganz besonders vorteilhaft, wenn das integral ausgebildete L-Profil des ersten Flügelkörper-Bauelementes integral aus einer Flügelkörperhaut des Flügelkörper-Bauelementes gebildet wird. Die Flügelkörperhaut ist dabei die äußere Begrenzung des Flügelkörpers und definiert an der Außenseite die Strömungsoberfläche.

In einer besonders bevorzugten Ausführungsform ist zumindest das erste Flügelkörper-Bauelement, vorteilhafterweise beide Flügelkörper-Bauelemente aus einem Faserverbundwerkstoff hergestellt, so dass sie aus einem solchen Faserverbundwerkstoff bestehen oder einen solchen Faserverbundwerkstoff aufweisen.

Gerade in dieser Kombination spielt die Erfindung ihren vorteilhaften Effekt aus, bei größtmöglicher Reduzierung des Gewichtes durch Verzicht zusätzlicher Bauteile und konsequenter Verwendung von Faserverbundwerkstoffen sowie grundsätzliche Begünstigung einer laminaren Grenzschicht den Treibstoffverbrauch auf ein Minimum zu senken.

Hierbei ist es selbstverständlich vorteilhaft, wenn das L-Profil des ersten Flügelkörper-Bauelementes integral aus dem Faserverbundwerkstoff des ersten Flügelkörper-Bauelementes ausgebildet ist. Hierdurch lässt sich der Faserverlauf definiert von dem ersten Flügel-Bauelement bis hin zum zweiten Schenkel des L-Profils führen, so dass eine größtmögliche Festigkeit und Steifigkeit bei Reduzierung des Gewichtes erreicht wird.

Die Erfinder haben hierbei erkannt, dass trotz der mehrfachen Faserumlenkungen aufgrund der integralen Ausbildung der L-Profile bei Verwendung eines Faserverbundwerkstoffes und des damit verbundenen Spring-in-Effektes dennoch eine sichere und präzise Anwendung des ersten Flügelkörper-Bauelementes mit dem zweiten Flügelkörper-Bauelementes derart möglich ist, dass eine laminar umströmbare Strömungsoberfläche gebildet wird. Unter dem Spring-in-Effekt wird dabei verstanden, dass es nach der Aushärtung des hergestellten Faserverbundbauteils eine Differenz zwischen dem angestrebten Winkel und dem tatsächlichen Winkel an einer Faserumlenkung ergibt, so dass es bei der Herstellung von insbesondere integral ausgebildeten und oft abgewinkelten Elementen häufig zu prozessbedingten Verformungen kommt. Die Ursachen des Spring-in-Effektes liegen in den anisotropen thermoelastischen Eigenschaften und dem chemischen Schrumpf der duroplastischen Matrix bei praktischer Temperaturunabhängigkeit der Dehnung der Kohlenstofffasern während des Vernetzungsprozess der Matrix begründet. In Richtung der Laminatausdehnung dominieren die Fasereigenschaften die Eigenschaft des Verbundes, während senkrecht dazu (in Dickenrichtung) die Matrixeigenschaften dominieren. Unter der Annahme, dass ein Faserverbundwerkstoff mit duroplastischer Matrix während der Aushärtereaktion bei hoher Temperatur aufgrund der hohen Steifigkeit in Faserrichtung chemischen Schrumpf nur in Dickenrichtung erfährt, folgt eine Abnahme der Laminatdicke bei gleichbleibenden Faserlängen. Dies führt zu einem Einfallen des Winkels um den sogenannten Spring-in-Winkel.

Erfindungsgemäß erstreckt sich ein Teil der die Strömungsoberfläche bildenden Außenseite des zweiten Flügelkörper-Bauelementes über die L-Profil-Aufnahme hinaus in Richtung des ersten Flügelkörper-Bauelementes und bildet so einen Überhang, unter dem dann ein Teil der Außenseite des ersten Flügelkörper-Bauelementes in den Innenraum des zweiten Flügelkörper-Bauelementes geführt ist, wenn die Flügelkörper-Bauelemente miteinander verbunden sind. Hierbei ist es ganz besonders vorteilhaft, wenn der Überhang so ausgebildet ist, dass der erste Schenkel des L-Profils, der von dem ersten Flügelköper-Bauelement noch nicht abgewinkelt ist, unter den Überhang geführt ist, während der zweite Schenkel abgewinkelt in den Innenraum ragt und formschlüssig an der L-Profil-Aufnahme anliegt. Damit auf der Strömungsoberfläche kein Versatz entsteht, der eine laminare Grenzschicht ungünstig beeinflusst, ist vorgesehen, dass der Teil der Außenseite des ersten Flügelkörper-Bauelementes, der unter den Überhang des zweiten Flügelkörper-Bauelementes geführt ist, mindestens um die Dicke des Überhanges tiefergestellt ist und somit in den Innenraum eingelassen ist, so dass die Strömungsoberfläche des ersten Flügelkörper-Bauelementes mit der Strömungsoberfläche des zweiten Flügelkörper-Bauelementes am Übergang zwischen den beiden Strömungsoberflächen im Wesentlichen plan ist.

Mit anderen Worten, der erste Schenkel des L-Profils ist gegenüber der Strömungsoberfläche in Richtung Innenraum tiefer gestellt, so dass der erste Schenkel des L-Profils unter den Überhang des zweiten Flügelkörper-Bauelementes geführt werden kann, um so den zweiten Schenkel des L-Profils an der L-Profil-Aufnahme des zweiten Flügelkörper-Bauelementes mittels der Verbindungselemente zu befestigen.

Ein Spalt im Übergang zwischen der Strömungsoberfläche des ersten und des zweiten Flügelkörper-Bauelementes kann dann mit einem Füllmaterial verfüllt werden, wobei dieser Spalt definiert und in seiner Ausdehnung relativ klein ist.

In einer weiteren vorteilhaften Ausführungsform weist das L-Profil des ersten Flügelkörper-Bauelementes spannweitig eine oder mehrere Öffnungen zum Durchführen von Befestigungselementen in den Innenraum des ersten Flügelkörper-Bauelementes auf, um so das erste Flügelkörper-Bauelement an noch mindestens einer weiteren Aufhängung an dem zweiten Flügelkörper-Bauelement befestigen zu können.

Ist das erste Flügelkörper-Bauelement beispielsweise eine Flügelvorderkante und das zweite Flügelkörper-Bauelement ein Flügelkasten, so ist es beispielsweise vorteilhaft, wenn die Öffnungen so ausgebildet sind, dass Rippenerweiterungen des Flügelkastens in die Flügelvorderkante hindurchgeführt werden können, um so die Flügelvorderkante innenliegend auch an den Rippenerweiterungen an weiteren Punkten befestigen zu können.

In einer Ausführungsform werden die L-Profil-Aufnahmen durch Versteifungselemente der Flügelschale des Flügelkastens gebildet, die in Strömungsrichtung vor dem Vorderholm des Flügelkastens liegen. Das L-Profil der Flügelvorderkante wird dann an den Versteifungselementen als L-Profil-Aufnahmen befestigt. Denkbar ist aber auch, dass die L-Profil-Aufnahme ein Teil des Vorderholms des Flügelkastens ist, so dass das L-Profil der Flügelvorderkante an dem Vorderholm des Flügelkastens befestigt wird.

Um die Umlenkung der Fasern des Faserverbundwerkstoffes bei der integralen Ausbildung des L-Profils zu reduzieren und somit den Spring-in-Effekt weiter zu reduzieren, wird des Weiteren vorgeschlagen, dass der erste Schenkel des integral ausgebildeten L-Profils unter einem Winkel in Bezug auf die Strömungsoberfläche in Richtung des Innenraumes abgewinkelt ist, wobei dieser Winkel kleiner als 45 Grad ist. Hierdurch entsteht zwischen dem ersten Schenkel des L-Profils und der Strömungsoberfläche des zweiten Strömungskörper-Bauelementes ein Oberflächenabsatz. Der erste Schenkel des L-Profils wird dabei im Wesentlichen gerade geführt, bis der zweite Schenkel des L-Profils winklig in den Innenraum hineinragt. In den entstehenden Oberflächenabsatz ist nun ein keilförmiges Füllelement eingesetzt, welches einen Teil der Strömungsoberfläche des Flügelkörpers bildet und somit den Oberflächenabsatz eliminiert, so dass der Übergang von der Strömungsoberfläche des ersten Flügelkörper-Bauelementes zu der Strömungsoberfläche des zweiten Flügelkörper-Bauelementes im Wesentlichen Plan ist und zum Teil durch das keilförmige Füllelement definiert ist. Der erste Schenkel des L-Profils geht dabei vorteilhafterweise tangentenstetig in das erste Flügelkörper-Bauelement über, um ein scharfes Abknicken der Faserführung zu vermeiden.

Vorteilhafterweise wird das erste Flügelkörper-Bauelement an einer tangentialen Verlängerung der Strömungsoberfläche des zweiten Flügelkörper-Bauelementes in Richtung des ersten Flügelkörper-Bauelementes in den Innenraum abgewinkelt, so dass zur integralen Ausbildung des L-Profils lediglich zwei Faserumlenkungen notwendig sind, von denen eine weniger als 45 Grad hat und die andere zwischen 45 Grad und 90 Grad hat. Die erste Faserumlenkung ist dabei die integrale Ausbildung des L-Profils aus dem ersten Flügelkörper-Bauelement und ist definiert zwischen dem ersten Flügelkörper-Bauelement und dem ersten Schenkel des L-Profils. Die zweite Faserumlenkung definiert den Winkel zwischen dem ersten und dem zweiten Schenkel des L-Profils. Wird der erste Schenkel des L-Profils unter einen Überhang geführt, so ist die Abwinkelung des ersten Schenkels des L-Profils abhängig von der Dicke der Flügelkörperhaut bzw. Flügelkörperschale des zweiten Flügelkörper-Bauelementes.

Um eine einfache Montierbarkeit und schnelle Austauschbarkeit des ersten Flügelkörper-Bauelementes zu gewährleisten, ist in einer vorteilhaften Ausführungsform vorgesehen, dass das L-Profil und die L-Profil-Aufnahme jeweils eine Mehrzahl von Bohrungen aufweisen, die sich jeweils paarweise zum Durchführen eines zylindrischen Verbindungselementes decken, wobei in jedem Bohrungspaar mindestens zwei drehbar gelagerte Exzenterbuchsen vorgesehen sind, um eine Abweichung der Bohrmitte einer Bohrung eines Bohrungspaares auszugleichen.

Denn in der Regel deckt sich die Bohrung des L-Profils nicht einhundertprozentig mit der korrespondierenden Bohrung in der L-Profil-Aufnahme, so dass spielfrei ein zylindrisches Verbindungselement eingebracht werden kann. In der Folge müssten die einzelnen Bohrungen nachgebohrt werden, was die Montagezeit erhöht und einer einfachen Austauschbarkeit entgegensteht. Durch das Vorsehen zweier Exzenterbuchsen in einer der Bohrung des jeweiligen Bohrungspaares ist es möglich, jede beliebige Abweichung von der Bohrmitte durch das Drehen der Exzenter auszugleichen, solange die Abweichung radial nicht weiter als die Summe der Exzentrizitäten der Exzenterbuchsen ist. Eine vollständige Austauschbarkeit ist damit gegeben, ohne dass ein Bohrlochmuster übertragen werden muss und Bohrungen an den Bauelementen zu einer neuen Passbohrung aufgebohrt werden müssten.

Vorteilhafterweise weist eine der Bohrung einen größeren Radius auf als die andere Bohrung des Bohrungspaares, wobei vorteilhafterweise die Exzenterbuchsen ineinandergreifend in die Bohrung mit dem größeren Radius eingesteckt sind.

In einer weiteren vorteilhaften Ausführungsform weist zumindest eines der beiden Bauelemente, vorzugsweise das erste Flügelkörper-Bauelement an der Außenseite eine Stahlfolie auf, um die darunterliegende von der Stahlfolie abgedeckte Faserverbundstruktur zu schützen. Ist das erste Flügelkörper-Bauelement eine Flügelvorderkante, so ist es vorteilhaft, wenn die gesamte Flügelvorderkante durch die Stahlfolie abgedeckt wird.

In der Ausführungsform, bei der ein keilförmiges Füllelement in den Oberflächenabsatz zwischen ersten und zweiten Flügelkörper-Bauelement eingesetzt wird, ist es besonders vorteilhaft, wenn die Stahlfolie sich von dem ersten Flügelkörper-Bauelement bis hin den keilförmigen Einleger erstreckt, besonders vorzugsweise bis zum Ende des keilförmigen Füllelementes.

Nachfolgend wird die Erfindung anhand der beigefügten Figuren beispielhaft näher erläutert.

Es zeigen:
- Figur 1: schematische Darstellung der erfindungsgemäßen Verbindungsanordnung im Querschnitt;
- Figur 2: perspektivische Darstellung einer Flügelvorderkante;
- Figur 3: schematische Darstellung einer vorteilhaften Ausführungsform der Verbindungsanordnung;
- Figur 4: Darstellung einer Verbindung mittels Exzenterbuchsen.

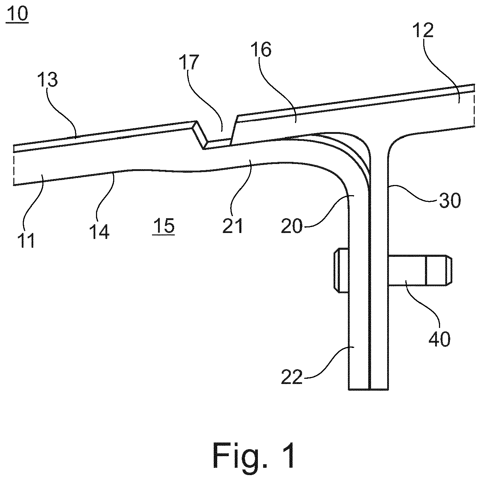

Figur 1 zeigt in einer stark vereinfachten Darstellung die erfindungsgemäße Verbindungsanordnung im Querschnitt, d.h. die spannweitige Ausdehnung führt aus der Betrachtungsebene heraus. Aus Übersichtsgründen ist nur ein Teil des Flügelkörpers, nämlich derjenige Teil mit der Verbindungsanordnung, gezeigt.

Der in Figur 1 teilweise dargestellte Flügelkörper 10 weist ein erstes Flügelkörper-Bauelement 11 und ein zweites Flügelkörper-Bauelement 12 auf, die mit Hilfe der dargestellten Verbindungsanordnung zu dem Flügelkörper 10 zusammengesetzt sind.

Die Flügelkörper-Bauelemente 11 und 12 haben eine Außenseite 13, welche die laminar zu umströmende Strömungsoberfläche bildet. Darüber hinaus weisen die Flügelkörper-Bauelemente 11 und 12 einen Innenseite 14 auf, so dass die Bauelemente 11 und 12 einen Außenraum von einem Innenraum 15 des Flügelkörpers 10 abtrennen.

Die Bauelemente 11 und 12 können aus einem Faserverbundwerkstoff hergestellt sein. Insbesondere handelt es sich bei dem ersten Flügelkörper-Bauelement 11 um die Flügelvorderkante einer Tragfläche als Flügelkörper, während das zweite Flügelkörper-Bauelement 12 die Flügelschale eines Flügelkastens bzw. den Flügelkasten selber darstellt.

An dem ersten Flügelkörper-Bauelement 11 ist erfindungsgemäß ein L-Profil 20 vorgesehen, das mit dem ersten Flügelkörper-Bauelement 11 integral ausgebildet ist. Integral meint hierbei einstückig und fügestellenfrei.

Das L-Profil 20 des ersten Flügelkörper-Bauelementes 11 weist einen ersten Schenkel 21 auf, der im Wesentlichen eine Verlängerung des ersten Flügelkörper-Bauelementes 11 darstellt und des Weiteren im Wesentlichen parallel zu der Außenseite 13 des Flügelkörpers 10 verläuft. Der Schenkel 21 des L-Profils 20 ist dabei lediglich um die Dicke der Flügelschale des zweiten Flügelkörper-Bauelementes 12 in Richtung Innenraum 15 tiefergestellt. An den ersten Schenkel 21 des L-Profils 20 schließt sich dann ein zweiter Schenkel 22 an, der unter einem definierten Winkel von dem ersten Schenkel 21 abragt und in Richtung Innenraum 15 des Flügelkörpers 10 hineinragt.

An dem zweiten Flügelkörper-Bauelement 12 ist des Weiteren eine L-Profil-Aufnahme 30 vorgesehen, die im Ausführungsbeispiel der Figur 1 ein Versteifungselement der Flügelschale des zweiten Flügelkörper-Bauelementes 12 darstellt. Die L-Profil-Aufnahme 30 des zweiten Flügelkörper-Bauelementes 12 ragt dabei ebenfalls in den Innenraum 15 des Flügelkörpers 10 hinein und verläuft im Wesentlichen parallel zu dem zweiten Schenkel des L-Profils 20.

Von dem zweiten Flügelkörper-Bauelement 12 erstreckt sich ab der L-Profil-Aufnahme 30 in Richtung des ersten Flügelkörper-Bauelementes 11 ein Überhang 16, der eine Verlängerung der Außenseite 13 des zweiten Flügelkörpers-Bauelementes 12 in Richtung des ersten Flügelkörper-Bauelementes 11 darstellt.

Durch das Tieferstellen des ersten Schenkel 21 des L-Profils 20 kann nunmehr das L-Profil 20 unter dem Überhang 16 des zweiten Flügelkörper-Bauelementes 12 geschoben werden, wobei die Außenseiten 13 der beiden Bauelemente 11 und 12 nach wie vor in einer Ebene liegen, so dass eine laminare Grenzschichtströmung begünstigt wird. Das L-Profil 20 ist dabei im Wesentlichen um die Stärke der Außenschale des zweiten Flügelkörper-Bauelementes 12 tiefergestellt.

Im Übergang zwischen der Außenseite des ersten und der Außenseite des zweiten Bauelementes kann eine definierte Lücke 17 vorgesehen sein, die mit einer Füllmasse verfüllt wird.

Zur Befestigung der beiden Bauelemente 11 und 12 aneinander zur Bildung des Flügelkörpers 10 ist nunmehr vorgesehen, dass der zweite Schenkel 22 des L-Profils 20 formschlüssig an der L-Profil-Aufnahme 30 anliegt und mit Hilfe eines innenliegenden Verbindungselementes 40 lösbar befestigt wird. Das Verbindungselement 40 kann beispielsweise ein lösbares Nietelement oder ein Bolzenelement beispielsweise ein Schraubbolzen, sein.

In der Querschnittsdarstellung der Figur 1 sind dabei die Bohrungen in dem L-Profil 20 sowie der L-Profil-Aufnahme 30 zur Durchführung des Verbindungselements 40 nicht gezeigt.

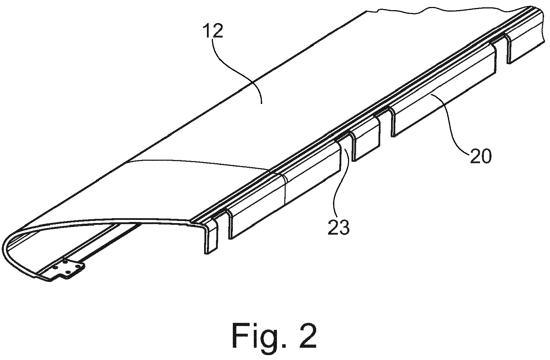

Figur 2 zeigt perspektivisch das erste Flügelkörper-Bauelement 11 als Flügelvorderkante. Wie zu erkennen ist, ist an der hinteren Seite das integral ausgebildete L-Profil 20 vorgesehen, das sich spannweitig quer zur Strömungsrichtung erstreckt und Öffnungen zur Durchführung von Befestigungselementen in den Innenraum des ersten Flügelkörper-Bauelementes aufweist, um so die Flügelvorderkante an weiteren Befestigungspunkten zu befestigen. Derartige durch die Öffnungen 23 geführte Befestigungselemente können beispielsweise Rippen oder Rippenverlängerungen innerhalb des Vorderflügels sein.

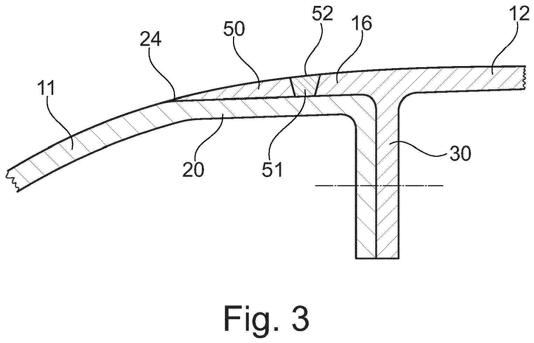

In Figur 3 ist schematisch eine Ausführungsform gezeigt, bei der das L-Profil 20 an einer tangentialen Verlängerung des Überhangs 16 beginnt, indem dort die Laminatschicht des ersten Flügelkörper-Bauelementes 11 umgelenkt und den Überhang 16 unterläuft. In Figur 3 ist dies an der Stelle 24 dargestellt, die den Beginn 24 des L-Profils 20 definiert. Zwischen dem Beginn 24 des L-Profils 20 und dem Beginn des Überhangs 16 würde nun ein Oberflächenabsatz entstehen, der durch ein keilförmiges Füllelement 50 geschlossen wird.

Hierzu kann bspw. während der Herstellung des ersten Flügelkörper-Bauelementes 11 und der integralen Ausformung des L-Profils 20 das keilförmige Füllelement 50 eingebracht werden, wobei anschließend das erste Flügelkörper-Bauelement 11 mit dem integral ausgeformten L-Profil 20 ausgehärtet und währenddessen das keilförmige Füllelement 50 mit dem ersten Flügelkörper-Bauelement 11 verbunden wird. Das Aushärten des ersten Flügelkörper-Bauelementes 11 mit dem integral ausgeformten L-Profil 20 und das Verbinden des keilförmigen Füllelementes 50 mit dem ersten Flügelkörper-Bauelement 11 erfolgt somit in einem Prozessschritt.

Denkbar ist hierbei, dass das keilförmige Füllelement 50 bereits ausgehärtet ist, wenn es beim Aushärten des ersten Flügelkörper-Bauelementes 11 verbunden wird (cobonding-Prozess), oder dass das keilförmige Füllelement 50 zusammen mit dem ersten Flügelkörper-Bauelement 11 gemeinsam ausgehärtet wird (cocuring-Prozess).

Dabei ist es weiterhin vorteilhaft, wenn eine Stahlfolie während des Aushärtungsprozesses mit dem ersten Flügelkörper-Bauelement 11 verbunden wird. Die Stahlfolie wird dabei vor dem Aushärten des ersten Flügelkörper-Bauelementes 11 und dem integral ausgeformten L-Profil 20 aufgebracht und im anschließenden Aushärtungsprozess ausgehärtet. Die Stahlfolie kann dabei bis zum Beginn des L-Profils 24 reichen oder auch das keilförmige Füllelement 50 mitabdecken und so bis zum Ende des Einlegers an die Füllmasse 51 heranreichen.

Durch den Einsatz des Einlegers 50 wird auch eine geometrisch definierte, kurz Lücke 52 definiert, die den Übergang zum zweiten Bauelement 12 darstellt, und die mit Hilfe einer Füllmasse 51 ausgefüllt werden kann.

Die Verlagerung der Umlenkung von der Trennstelle weg und gleichzeitige Verringerung der Anzahl der Radien verhindert eine Änderung der für die Laminarhaltung relevanten Stufenhöhe an der Trennstelle durch im Betrieb auftretende Spring-in-Effekte an Faserumlenkungen.

Der verwendete Füllstoff der Füllmasse 51 kann beispielsweise aus einem Polymer bestehen oder ein solches Polymer aufweisen.

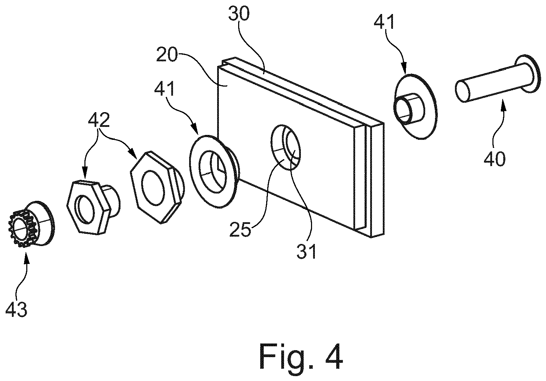

Figur 4 zeigt in einem Ausführungsbeispiel die Anordnung des L-Profils 20 des ersten Flügelkörper-Bauelementes an der L-Profil-Aufnahme 30 des zweiten Flügelkörper-Bauelementes. In dem L-Profil 20 ist eine Bohrung 25 vorgesehen, die gegenüber der Bohrung 31 der L-Profil-Aufnahme 30 einen größeren Radius aufweist. Zusammen bilden die Bohrung 25 des L-Profils 20 und die Bohrung 31 der L-Profil-Aufnahme 30 ein Bohrungspaar, durch das ein Verbindungselement 40 in Form eines zylindrischen Bolzens zur Verbindung eingeschoben werden kann.

In die vorgefertigten Bohrungen 25 und 31 werden Einklebebuchsen 41 eingeklebt, um so die Bohrungen zu schützen bzw. zu konservieren. In die größere der beiden Bohrungen 25 werden nun zwei aneinander greifende Exzenterbuchsen 42 gesteckt. Ein Verdrehen der Exzenter 42 führt dazu, dass bei Positionsabweichungen der Bohrungsmitte in den Bauteilen zueinander jede Position der kleineren Bohrung erreicht werden kann, sofern sie radial nicht weiter als die Summe der Exzentrizität der Exzenterbohrungen der Buchsen von der Mittelachse der größeren Bohrung entfernt ist. Das innenliegende Verbindungselement 40 wird dann mit einem Schließring 43 fixiert.

Damit ist eine vollständige Austauschbarkeit gegeben, ohne dass ein Bohrlochmuster für insbesondere Vorderkanten übertragen und die Bohrung an der Flügelschale zu einer neuen Passbohrung aufgebaut werden müsste.

Aufgrund der Steifigkeit des zweiten Schenkels des L-Profils des ersten Flügelkörper-Bauelementes und der L-Profil-Aufnahme des zweiten Flügelkörper-Bauelementes sowie des Kontaktes des ersten Schenkels des ersten Flügelkörper-Bauelementes mit dem Überhang des zweiten Flügelkörper-Bauelementes kann die Anzahl der Verbindungselemente gegenüber dem Stand der Technik und den Auslegungskriterien deutlich reduziert werden. Es wurde erkannt, dass die Anbindungspunkte um fast ein Drittel reduziert werden können und dennoch bei reduzierter Anzahl von Verbindungselementen die Kriterien für die Laminarhaltung der Strömung eingehalten werden können. Darüber hinaus wirkt sich die reduzierte Anzahl von Anbindungspunkten vorteilhaft auf den Aufwand der Montage und des Austausches der Flügelvorderkante aus.

Darüber hinaus ist es mit dem erfindungsgemäßen Anbindungskonzept möglich, Hochauftriebssysteme in der Flügelvorderkante vorzusehen, wie beispielsweise die sogenannten Krüger-Klappen.

### Bezugszeichenliste:

| | |
|---|---|
| Flügelkörper | 10 |
| Erstes Flügelkörper-Bauelement | 11 |
| Zweites Flügelkörper-Bauelement | 12 |
| Außenseite | 13 |
| Innenseite | 14 |
| Innenraum | 15 |
| Überhang | 16 |
| Definierte Lücke | 17 |
| L-Profil | 20 |
| Erster Schenkel | 21 |
| Zweiter Schenkel | 22 |
| Öffnungen | 23 |
| L-Profil Beginn | 24 |
| Bohrung | 25 |
| L-Profil-Aufnahme | 30 |
| Bohrung | 31 |
| Innenliegendes Verbindungselement | 40 |
| Einklebebuchsen | 41 |
| Exzenterbuchse | 42 |
| Schließring | 43 |
| Keilförmiges Füllelement/Einleger | 50 |
| Füllmasse | 51 |
| Kurze Lücke | 52 |

## Patentansprüche

1. Flügelkörper (10) für Flugobjekte umfassend wenigstens zwei Flügelkörper-Bauelemente (11, 12), die jeweils an einer Außenseite (13) eine umströmbare Strömungsoberfläche aufweisen und an einer Innenseite (14) eine zur Außenseite abgegrenzten Innenraum (15) ausbilden, **dadurch gekennzeichnet, dass**
• das erste Flügelkörper-Bauelement (11) mindestens ein in den Innenraum ragendes L-Profil (20) hat, das mit dem ersten Flügelkörper-Bauelement integral ausgebildet ist, wobei das erste Flügelkörper-Bauelement eine Flügelvorderkante ist,
• das zweite Flügelkörper-Bauelement (12) mindestens eine in dem Innenraum angeordnete L-Profil-Aufnahme (30) aufweist, wobei das zweite Flügelkörper-Bauelement ein Flügelkasten mit Flügelschalen ist,
• wobei das mindestens eine L-Profil des ersten Flügelkörper-Bauelementes zum Verbinden der beiden Flügelkörper-Bauelemente an der L-Profil-Aufnahme des zweiten Flügelkörper-Bauelementes mit innenliegenden Verbindungselementen (40) derart befestigt ist, dass die Verbindungselemente nicht durch die Strömungsoberfläche geführt sind, und
• wobei sich das mindestens eine L-Profil des ersten Flügelkörper-Bauelementes und die mindestens eine L-Profil-Aufnahme des zweiten Flügelkörper-Bauelementes quer zur Strömungsrichtung spannweitig erstrecken,
• wobei sich ein Teil der die Strömungsoberfläche bildenden Außenseite des zweiten Flügelkörper-Bauelementes über die L-Profil-Aufnahme hinaus in Richtung des ersten Flügelkörper-Bauelementes erstreckt und einen Überhang (16) bildet, unter den ein Teil der Außenseite des ersten Flügelkörper-Bauelementes in den Innenraum des zweiten Flügelkörper-Bauelementes geführt ist, wenn die Flügelkörper-Bauelemente miteinander verbunden sind, und
• wobei der Teil der Außenseite des ersten Flügelkörper-Bauelementes, der unter den Überhang des zweiten Flügelkörper-Bauelementes geführt ist, in Richtung des Innenraumes tiefergestellt ist, wobei der Übergang zwischen der Strömungsoberfläche des ersten Flügelkörper-Bauelementes und der Strömungsoberfläche des zweiten Flügelkörper-Bauelementes im Wesentlichen plan ist.

2. Flügelkörper nach Anspruch 1, **dadurch gekennzeichnet, dass** ein oder beide Flügelkörper-Bauelemente aus einem Faserverbundwerkstoff bestehen oder einen solchen Faserverbundwerkstoff aufweisen.

3. Flügelkörper nach Anspruch 1 oder 2, **dadurch gekennzeichnet, dass** ein Spalt im Übergang zwischen der Strömungsoberfläche des ersten Flügelkörper-Bauelementes und der Strömungsoberfläche des zweiten Flügelkörper-Bauelementes mit einem Füllmaterial (51) verfüllt ist.

4. Flügelkörper nach einem der vorhergehenden Ansprüche, **dadurch gekennzeichnet, dass** das L-Profil des ersten Flügelkörper-Bauelementes spannweitig eine oder mehrere Öffnungen (23) zum Durchführen von Befestigungselementen in den Innenraum des ersten Flügelkörper-Bauelementes aufweist.

5. Flügelkörper nach einem der vorhergehenden Ansprüche, **dadurch gekennzeichnet, dass** das L-Profil oder die L-Profil-Aufnahme ein vor einem Vorderholm des Flügelkastens liegendes Versteifungselement der Flügelschale oder ein Teil eines Vorderholmes des Flügelkastens ist.

6. Flügelkörper nach einem der vorhergehenden Ansprüche, **dadurch gekennzeichnet, dass** das erste Flügelkörper-Bauelement in einem Abstand vor dem integral ausgebildeten L-Profil unter einem Winkel in Bezug auf die Strömungsoberfläche in Richtung des Innenraumes abgewinkelt ist, sodass zwischen der Strömungsoberfläche des zweiten Flügelkörper-Bauelementes und der Strömungsoberfläche des ersten Flügelkörper-Bauelementes ein Oberflächenabsatz entsteht, in den ein keilförmiges Füllelement (50) eingesetzt ist, welches einen Teil der Strömungsoberfläche des Flügelkörpers bildet.

7. Flügelkörper nach Anspruch 6, **dadurch gekennzeichnet, dass** der Übergang zwischen der Strömungsoberfläche des ersten Flügelkörper-Bauelementes und der Strömungsoberfläche des keilförmigen Füllelementes und/oder zwischen der Strömungsoberfläche des keilförmigen Füllelementes und der Strömungsoberfläche des zweiten Flügelkörper-Bauelementes im Wesentlichen plan ist, wobei ein Spalt im Übergang zwischen der Strömungsoberfläche des keilförmigen Füllelementes und der Strömungsoberfläche des zweiten Flügelkörper-Bauelementes mit einem Füllmaterial verfüllt ist.

8. Flügelkörper nach Anspruch 6 oder 7, **dadurch gekennzeichnet, dass** das erste Flügelkörper-Bauelement an einer tangentialen Verlängerung der Strömungsoberfläche des zweiten Flügelkörper-Bauelementes in Richtung des ersten Flügelkörper-Bauelementes abgewinkelt ist.

9. Flügelkörper nach einem der vorhergehenden Ansprüche, **dadurch gekennzeichnet, dass** das L-Profil und die L-Profil-Aufnahme jeweils eine Mehrzahl von Bohrungen aufweisen, die sich jeweils paarweise zum Durchführen eines zylindrischen Verbindungselementes decken, wobei in jedem Bohrungspaar mindestens zwei drehbar gelagerte Exzenterbuchsen (42) vorgesehen sind, um eine Abweichung der Bohrungsmitte einer Bohrung eines Bohrungspaares auszugleichen.

10. Flügelkörper nach Anspruch 9, **dadurch gekennzeichnet, dass** eine der Bohrungen eines jeweiligen Bohrungspaares einen größeren Radius aufweist als die andere Bohrung des jeweiligen Bohrungspaares.

11. Flügelkörper nach Anspruch 9 oder 10, **dadurch gekennzeichnet, dass** in den Bohrungspaaren zwei ineinandergreifende Exzenterbuchsen vorgesehen sind, die drehbar zueinander gelagert sind.

12. Verfahren zum Verbinden zweier Flügelkörper-Bauelemente zu einem Flügelkörper nach einem der vorhergehenden Ansprüche, mit den Schritten:
• Bereitstellen der beiden getrennten Flügelkörper-Bauelemente eines Flügelkörpers nach einem der vorhergehenden Ansprüche,
• Anordnen des L-Profils des ersten Flügelkörper-Bauelementes an der L-Profil-Aufnahme des zweiten Flügelkörper-Bauelementes, und
• Verbinden der beiden Flügelkörper-Bauelemente zu dem Flügelkörper durch Befestigen des L-Profis an der L-Profil-Aufnahme mit den innenliegenden Verbindungselementen.

## Claims

1. Wing body for flying objects comprising at least two wing body components which each have a flow surface around which flow can take place on an outer side and form an interior space delimited from the outer side on an inner side, **characterised in that**
• the first wing body component has at least one L-profile projecting into the interior space, which is integrally formed with the first wing body component, wherein the first wing body component is a wing leading edge,
• the second wing body component has at least one L-profile receptacle arranged in the interior space, wherein the second wing body component is a wing box with wing shells,
• wherein the at least one L-profile of the first wing-body component for connecting the two wing-body components is fastened to the L-profile receptacle of the second wing-body component with internal connecting elements in such a way that the connecting elements are not guided through the flow surface, and
• wherein the at least one L-profile of the first wing body component and the at least one L-profile receptacle of the second wing body component extend spanwise transversely to the direction of flow,
• wherein a part of the outer side of the second wing body component forming the flow surface extends beyond the L-profile seat in the direction of the first wing body component and forms an overhang under which a part of the outer side of the first wing body component is guided into the interior of the second wing body component when the wing body components are connected to each other, and
• wherein the part of the outer side of the first wing body component which is guided under the overhang of the second wing body component is lowered in the direction of the inner space, wherein the transition between the flow surface of the first wing body component and the flow surface of the second wing body component is substantially planar.

2. Wing body according to claim 1, **characterised in that** one or both wing body components consist of a fibre composite material or comprise such a fibre composite material.

3. Wing body according to claim 1 or 2, **characterised in that** a gap in the transition between the flow surface of the first wing body component and the flow surface of the second wing body component is filled with a filler material.

4. Wing body according to one of the preceding claims, **characterised in that** the L-profile of the first wing body component has one or more openings across the span for the passage of fastening elements into the interior of the first wing body component.

5. Wing body according to one of the preceding claims, **characterised in that** the L-profile or the L-profile receptacle is a stiffening element of the wing shell lying in front of a front spar of the wing box or a part of a front spar of the wing box.

6. Wing body according to one of the preceding claims, **characterised in that** the first wing body component is angled at a distance in front of the integrally formed L-profile at an angle with respect to the flow surface in the direction of the inner space, so that between the flow surface of the second wing body component and the flow surface of the first wing body component a surface shoulder is formed, into which a wedge-shaped filling element is inserted, which forms part of the flow surface of the wing body.

7. Wing body according to claim 6, **characterised in that** the transition between the flow surface of the first wing body component and the flow surface of the wedge-shaped filling element and/or between the flow surface of the wedge-shaped filling element and the flow surface of the second wing body component is substantially planar, wherein a gap in the transition between the flow surface of the wedge-shaped filling element and the flow surface of the second wing body component is filled with a filling material.

8. Wing body according to claim 6 or 7, **characterised in that** the first wing body component is angled at a tangential extension of the flow surface of the second wing body component in the direction of the first wing body component.

9. Wing body according to one of the preceding claims, **characterised in that** the L-profile and the L-profile receptacle each have a plurality of bores which each coincide in pairs for the passage of a cylindrical connecting element, at least two rotatably mounted eccentric bushings being provided in each pair of bores in order to compensate for a deviation of the bore centre of a bore of a pair of bores.

10. Wing body according to claim 9, **characterised in that** one of the bores of a respective bore pair has a larger radius than the other bore of the respective bore pair.

11. Wing body according to claim 9 or 10, **characterised in that** two intermeshing eccentric bushes are provided in the pairs of bores and are mounted rotatably relative to one another.

12. A method of joining two wing body components to form a wing body according to any one of the preceding claims, comprising the steps:
• Providing two separate wing body components of a wing body according to any one of the preceding claims,
• arranging the L-profile of the first wing body component on the L-profile receptacle of the second wing body component, and
• Connect the two sash body components to the sash body by fastening the L-profile to the L-profile mount with the internal fasteners.

## Revendications

1. Corps d'aile (10) pour objets volants, comprenant au moins deux composants de corps d'aile (11, 12) qui présentent chacun sur une face extérieure (13) une surface d'écoulement autour de laquelle peut circuler un écoulement, et qui forment sur une face intérieure (14) un espace intérieur (15) délimité par rapport à la face extérieure,
**caractérisé en ce que**
• le premier composant de corps d'aile (11) présente au moins un profilé en L (20) qui pénètre dans l'espace intérieur et qui est réalisé intégralement avec le premier composant de corps d'aile, le premier composant de corps d'aile étant un bord d'attaque de l'aile,
• le second composant de corps d'aile (12) présente au moins un logement à profilé en L (30) disposé dans l'espace intérieur, le second composant de corps d'aile étant un caisson d'aile ayant des coques d'aile,
• ledit au moins un profilé en L du premier composant de corps d'aile est fixé au logement à profilé en L du second composant de corps d'aile par des éléments de liaison intérieurs (40) pour relier les deux composants de corps d'aile, de telle sorte que les éléments de liaison ne passent pas par la surface d'écoulement, et
• ledit au moins un profilé en L du premier composant de corps d'aile et ledit au moins un logement à profilé en L du second composant de corps d'aile s'étendent dans le sens de l'envergure transversalement à la direction d'écoulement,
• une partie de la face extérieure du second composant de corps d'aile, formant la surface d'écoulement, s'étend au-delà du logement à profilé en L en direction du premier composant de corps d'aile et forme un porte-à-faux (16) au-dessous duquel une partie de la face extérieure du premier composant de corps d'aile est menée dans l'espace intérieur du second composant de corps d'aile, lorsque les composants de corps d'aile sont reliés l'un à l'autre, et
• une partie de la face extérieure du premier composant de corps d'aile, menée au-dessous du porte-à-faux du second composant de corps d'aile, est placée plus bas en direction de l'espace intérieur, la transition entre la surface d'écoulement du premier composant de corps d'aile et la surface d'écoulement du second composant de corps d'aile étant sensiblement plane.

2. Corps d'aile selon la revendication 1,
**caractérisé en ce que** l'un ou les deux composants de corps d'aile sont constitués d'un matériau composite de fibres ou comprennent un tel matériau composite de fibres.

3. Corps d'aile selon la revendication 1 ou 2,
**caractérisé en ce qu'**un intervalle dans la transition entre la surface d'écoulement du premier composant de corps d'aile et la surface d'écoulement du second composant de corps d'aile est rempli d'un matériau de remplissage (51).

4. Corps d'aile selon l'une des revendications précédentes,
**caractérisé en ce que** le profilé en L du premier composant de corps d'aile présente, dans le sens de l'envergure, une ou plusieurs ouvertures (23) pour faire passer des éléments de fixation jusque dans l'espace intérieur du premier composant de corps d'aile.

5. Corps d'aile selon l'une des revendications précédentes,
**caractérisé en ce que** le profilé en L ou le logement à profilé en L est un élément de rigidification de la coque d'aile situé devant un longeron avant du caisson d'aile ou est une partie d'un longeron avant du caisson d'aile.

6. Corps d'aile selon l'une des revendications précédentes,
**caractérisé en ce qu'**à une certaine distance devant le profilé en L réalisé intégralement, le premier composant de corps d'aile est incliné selon un angle par rapport à la surface d'écoulement dans la direction de l'espace intérieur, de sorte qu'un épaulement de surface se forme entre la surface d'écoulement du second composant de corps d'aile et la surface d'écoulement du premier composant de corps d'aile, épaulement dans lequel est inséré un élément de remplissage (50) en forme de coin qui forme une partie de la surface d'écoulement du corps d'aile.

7. Corps d'aile selon la revendication 6,
**caractérisé en ce que** la transition entre la surface d'écoulement du premier composant de corps d'aile et la surface d'écoulement de l'élément de remplissage en forme de coin et/ou entre la surface d'écoulement de l'élément de remplissage en forme de coin et la surface d'écoulement du second composant de corps d'aile est sensiblement plane, un intervalle dans la transition entre la surface d'écoulement de l'élément de remplissage en forme de coin et la surface d'écoulement du second composant de corps d'aile étant rempli d'un matériau de remplissage.

8. Corps d'aile selon la revendication 6 ou 7,
**caractérisé en ce que** le premier composant de corps d'aile est incliné au niveau d'un prolongement tangentiel de la surface d'écoulement du second composant de corps d'aile en direction du premier composant de corps d'aile.

9. Corps d'aile selon l'une des revendications précédentes,
**caractérisé en ce que** le profilé en L et le logement à profilé en L présentent chacun une pluralité d'alésages qui coïncident par paires pour faire passer un élément de liaison cylindrique, au moins deux douilles excentriques (42) montées mobiles en rotation étant prévues dans chaque paire d'alésages pour compenser un écart du centre d'un alésage d'une paire d'alésages.

10. Corps d'aile selon la revendication 9,
**caractérisé en ce que** l'un des alésages d'une paire d'alésages respective présente un rayon plus grand que l'autre alésage de la paire d'alésages respective.

11. Corps d'aile selon la revendication 9 ou 10,
**caractérisé en ce que** deux douilles excentriques s'engageant l'une dans l'autre sont prévues dans les paires d'alésages et sont montées mobiles en rotation l'une par rapport à l'autre.

12. Procédé de liaison de deux composants de corps d'aile pour former un corps d'aile selon l'une des revendications précédentes, comprenant les étapes consistant à :
• fournir les deux composants de corps d'aile distincts d'un corps d'aile selon l'une des revendications précédentes,
• agencer le profilé en L du premier composant de corps d'aile au niveau du logement à profilé en L du second composant de corps d'aile, et
• relier les deux composants de corps d'aile pour former le corps d'aile en fixant le profilé en L au logement à profilé en L au moyen des éléments de liaison intérieurs.
